(19)

Europäisches
Patentamt
European
Patent Office
Office européen
des brevets

(11) **EP 2 241 178 A1**

(12) **EUROPEAN PATENT APPLICATION**

(43) Date of publication:
 **20.10.2010 Bulletin 2010/42**

(51) Int Cl.:
 *A01K 1/015* *(2006.01)*

(21) Application number: **09251125.2**

(22) Date of filing: **17.04.2009**

(84) Designated Contracting States:
 **AT BE BG CH CY CZ DE DK EE ES FI FR GB GR
 HR HU IE IS IT LI LT LU LV MC MK MT NL NO PL
 PT RO SE SI SK TR**
 Designated Extension States:
 **AL BA RS**

(71) Applicants:
 • **Imperial Innovations Limited
 London SW7 2AZ (GB)**
 • **Bob Martin (UK) Ltd.
 Yatton, Somerset BS49 4BS (GB)**

(72) Inventors:
 • **Cheeseman, Christopher Robert
 Crawley RH10 7RF (GB)**

 • **Tyrer, Mark
 Derby DE22 1DA (GB)**
 • **Greaves, Rosemary Irene Whincup
 London W4 1TF (GB)**
 • **Lupo, Richard Anthony
 Teddington TW11 9AW (GB)**
 • **Madan, Savi
 Bristol BS40 8RA (GB)**

(74) Representative: **Hedley, Nicholas James Matthew
 et al
 Kilburn & Strode LLP
 20 Red Lion Street
 London
 WC1R 4PJ (GB)**

(54) **Absorbent material**

(57) This invention relates to an absorbent composition, its manufacture and its use, particularly to the use of the composition in cat litter. The composition includes
(a) a particulate inorganic mineral,
(b) one or more superabsorbent polymers (SAP) dispersed between the particles of the mineral , and
(c) a hydrophilic binder capable of binding the mineral and the SAP into discrete granules.

The granular material produced has water absorbency characteristics comparable to that of more expensive bentonite-products. The mineral may be waste quarry fines that would otherwise have to be disposed of. Such fines are widely available, in contrast to bentonite that must be shipped from a restricted number of locations, which is environmentally damaging and associated with excessive product miles.

The granules can be made by mixing the mineral and the super absorbent polymer to form a slurry, draining the water from the slurry and optionally pressing the resulting filter cake, mixing the binder with the wet filter cake and granulating the resulting composition.

Figure 1

EP 2 241 178 A1

## Description

### Technical Field

This invention relates to an absorbent, granular composition, its manufacture and use.

### Background Art

Household pets are often trained to use a 'litter box' or 'litter tray' to urinate in. Having a litter tray allows easy and hygienic disposal of animal waste.

Pet owners fill litter trays with absorbent granules, commonly referred to as 'cat litter', in order to absorb cat urine and provide an enclosed area allowing easy disposal. Once used, the cat litter granules are disposed of and replaced with fresh litter. Some cat litters have granules that 'clump' together when they come into contact with a liquid. Accordingly, solid clumps of the cat litter form, which can be easily separated from the rest of the cat litter in the tray, removed and disposed of. Clumping cat litter enables the contents of the litter tray to be changed less frequently, thereby providing a more economic option than so-called 'non-clumping' cat litters, which do not form solid clumps when wet.

Good liquid absorption is an essential feature of cat litters. Another important consumer concern is the 'trackability' of a cat litter. Trackability refers to whether, or to what extent, dust or particles of cat litter are carried out of the tray on the cat's paws and tracked throughout the house. Dust formation is thus an important consideration for cat litter consumers, not only to reduce trackability but also to reduce respirator problems for both humans and animals.

Various types of cat litter are used. One is a litter based on bentonite, which is a naturally occurring clay that has good water absorption properties; it also 'clumps' together when wet. Bentonite is typically able to absorb approximately 70% of its own weight of water. Bentonite, however, is only found in a limited number of places, e.g. Cyprus and Turkey, and therefore has to be transported to the country where it is used, which can be a considerable distance; this not only makes bentonite expensive but also, in view of the transport energy needed, environmentally damaging. Further disadvantages of bentonite cat litters are that they are fairly heavy and that they must be disposed of in landfill. Nonetheless bentonite cat litters represent the majority of the market.

A further type of cat litter is formed of silica gel beads distributed in a carrier material; the gel beads rapidly absorb a substantial amount of moisture and they can absorb and retain up to 40 times their own weight in water. For this reason this type of cat litter lasts longer than other types. The frequency of completely exchanging the contents of the litter tray with fresh cat litter, as well as the volume of waste compared to other types of cat litter, is reduced. Silica gel cat litter is however expensive and, again, must be disposed of in landfill sites.

A still further type of cat litter uses biodegradable products such as recycled paper, wood pellets and pelleted sawdust. These are more environmentally friendly than other types of cat litter since they can be composted. However they only absorb relatively small amounts of water.

The present invention provides a water absorbent granular material that can be used as a cat litter and is largely made of waste material and so is relatively cheap and yet it is highly absorbent.

Superabsorbent polymers (SAP) form a known class of polymer that are able to absorb and retain large amounts of aqueous liquids, typically over 100 times their own weight in liquid and some are known that can absorb up to 500 times their weight in deionized or distilled water, which can be 30-60 times their own volume. They are widely used in babies' nappies (diapers) not only because of their water absorbency but also because they are light (when dry). However, SAPs are expensive and so have not been used in cat litters.

### Disclosure of the Invention

The invention is set out in the claims.

The present invention provides a granular composition that can absorb aqueous liquids, the granules comprising a particulate inorganic mineral, a superabsorbent polymer (SAP) dispersed between the inorganic mineral particles and a hydrophilic polymer binder that binds the mineral and the SAP into cohesive granules, which not only maintains the integrity of the granules but also act as a dust suppressant.

It is a preferred feature of the present invention that the water absorbent composition, especially cat litter, can make good use of waste inorganic mineral materials that would otherwise have to be thrown away.

Except where explicitly stated otherwise, all percentages given in this specification are based on the combined weight of the mineral, the SAP and the hydrophilic polymer. The term "particle" and "particulate" will be used in this specification to refer to the individual grains of the mineral, whereas "granule" and "granular" will be used to refer to the larger diameter conglomeration of minerals, SAP and binder. The following description is largely directed to cat litter, but it will be appreciated that the granules of the present invention have wider uses, as also discussed below.

The composition of the present invention is generally in a dry granular form. On contact with a liquid, such as water or urine, the SAP and the mineral both absorb the liquid (although the SAP will generally absorb the greater part of the liquid) and are able to retain a substantial amount of it inside the granules. The granules will usually clump together in the process. The SAP should generally be present not only on the surface of the granules, but also distributed/dispersed within the granules. It has been found that SAPs can be distributed within the granules fairly easily by a simple wet-mixing process, as discussed in further detail below.

The mineral material may be porous in its own right, e.g. chalk, but the granules will also absorb water by capillary action along pores between the mineral particles. Such pores also provide channels for the aqueous liquid to access the SAP within the granules and also provide space for the SAP to expand into as the liquid is absorbed; however, the pores in themselves will generally not be large enough to accommodate all the increase in the SAP volume and so water absorption will generally cause the granules as a whole to swell.

The particle size of the mineral may be less than $1000\mu m$ and generally will be less than $250\mu m$ in order to achieve good mixing with the SAP and to provide inter-particle porosity. Most mineral powders of the above size will have a diameter greater than $0.01\ \mu m$ in diameter, and generally greater than $1\ \mu m$. Mineral material of this size (known as "fines" or "silt") is usually a waste product produced during quarrying and so is very cheap and indeed quarrying companies have to pay to dispose of or store it. Since such fines are geographically widely available, cat litter can be made close to the consumer, in contrast to bentonite which must be transported over long distances, as mentioned above.

The mineral can for example be calcium carbonate ($CaCO_3$), gypsum ($CaSO_4$), or other mineral, or a mixture of two or more minerals. A mixture of different minerals is also envisaged and indeed such waste mineral fines will often be a mixture since they include impurities such as sand and clay particles.

As mentioned above, dust suppression is an important feature of cat litter, not only because of its 'trackability' but also because of the effect dust particles have on the respiratory system of humans and animals. Therefore it is desirable to minimise the dust created by the composition. It is also important that the granules should retain their shape during handling and not crumble. Both these properties are provided by a binder, which will generally be a hydrophilic polymer that coats the granules and the individual mineral particles within the granules and so provides a matrix within each granule that holds the mineral particles together. The binder also lends the composition robustness during handling, resulting in less dust being created during general handling, for example during packaging or when transferred out of the packaging into a litter tray.

Suitable examples of hydrophilic polymers are polysaccharides, such as starch (for example Casucol 301 (Avebe Ltd)), acrylamide copolymers (e.g. Alcotac CB6), cellulose, glycogen, chitin or inulin, or a mixture of any two or more hydrophilic polymers. Other water-soluble polymers, such as polyvinyl alcohol (PVA) may also be used.

The term "superabsorbent polymer" (SAP) used in the present specification is a polymer that is able to absorb and retain at least 50 times its own weight in pure, i.e. distilled, water. However, more absorbent polymers may be used, i.e. those able to absorb and retain at least 100 times, or even at least 200 times, its own weight in aqueous liquid. There is no upper limit to the absorption of the SAP that can be used in the present invention and the use of SAPs that absorb and retain at least 300 times or even 400 times may be used. However the choice of SAP will generally be a compromise between its absorbency, cost and density/cross-linking.

The SAP may be poly-acrylic acid, sodium salt (sometimes referred to as cross-linked sodium polyacrylate), which is the most common superabsorbent polymer and is a polymer of acrylic acid blended with sodium hydroxide. Other SAPs include polyacrylamide copolymer, ethylene maleic anhydride copolymer, cross-linked carboxy-methyl-cellulose, polyvinyl alcohol copolymers, cross-linked polyethylene oxide, polyvinylalcohol, cellulose, methylcellulose and starch grafted copolymer of polyacrylonitrile. SAPs are generally provided as a dry powder. The preferred SAPs are crosslinked acrylic acid polymers, crosslinked acrylamide polymers and salts thereof, especially sodium, potassium and/or ammonium salts.

In a composition of this invention, the SAP particle size may be less than or equal to 800 $\mu m$ and more preferably less than or equal to 200 $\mu m$ is used.

The degree of swelling observed when a SAP absorbs liquid depends on the type of SAP and the degree of cross-linking. On absorption of liquid, a higher-density SAP, i.e. an SAP which has a high degree of cross-linking, retains its shape better than a lower-density SAP, which tends to form a gel on absorption of liquid. Higher density SAPs have the advantage that pressure can be applied to granules of the composition comprising such higher-density SAPs, without the SAP forming a gel. This is an important consideration for applications such as cat litter, as pressure will be exerted on the granules when a cat walks over them. Higher-density SAPs do however have the drawback that they are able to absorb less liquid than lower-density SAPs, due to the inherent lower available interior volume or 'empty space' within the SAP.

We have surprisingly found that the compositions of the present invention are able to absorb amounts of liquid comparable with and even exceeding presently available cat litters using very small amounts of SAP, which makes the compositions of the present invention competitive on price with other forms of cat litter. SAP is expensive and so the efficient use of the SAP dispersed between the mineral particles is important to keep the cost as low as possible. We have made compositions that are able to absorb at least 100% and even 140% of their own weight using as little as 0.5% by weight of SAP. In contrast, bentonite-type cat litters that are currently on the market are able to absorb approximately 70% of their own weight in water. Water absorbency is measured using the Westinghouse test, as described below.

Absorption of moisture into the granules occurs quickly which assists odour control and prevention of bacterial growth. As moisture is taken up into the granules rather than being left to stand for any length of time, a damp environment, helpful to bacterial multiplication, is avoided in the litter tray. The rate of absorption is believed to be primarily controlled by the amount of SAP present in the composition and the absorbency of the mineral.

It is believed that the absorption of moisture by the granules of the claimed composition proceeds as follows:

1) Water is adsorbed immediately by the mineral and the SAP present at the surface of the granules.
2) The water is then absorbed into the porous granules by the absorption capacity of both the SAP and (to a lesser degree) the mineral.
3) The open, porous structure of the granules of the composition allows the water to move further into the interior of the granules.
4) The absorbed water is retained within the granule structure, by virtue of the hydrogen bonds formed between the SAP and the absorbed water.

The incorporation of the SAP within a matrix of the mineral particles is an essential feature of the composition because it allows the composition to retain substantial amounts of liquid within its structure. The effect would not be as pronounced if the SAP merely coated the granules.

Further additives may be incorporated into the composition; the type and quantity of additives depends on the foreseen application of the composition. Typical additives include biocides, deodorisers/perfume, and colourants, especially for domestic use as cat litter. The amount of each additive may for example be up to 3% in total by weight, although the colourants in particular may be present in a greater quantity than this.

One or more colourants (colouring agents) may be included in the composition, in order to alter the colour of the granules since it is important to some consumers that cat litter granules should have a light colour, such as white or light grey, to give a cleaner appearance to the litter tray contents. Alternatively, the mineral used to make the granules can be light, e.g. chalk (calcium carbonate) is naturally white in colour but when it contains other particles such as sand, and clay, as is the case when it is obtained as an impure waste product, it may appear brown. Pigment, such as titanium dioxide ($TiO_2$), can be added in order to obtain lighter coloured granules that are more appealing to the buying public. For reason of cost, the amount of any colourant added will generally be limited to 3 wt%.

The composition of the present invention can comprise, by weight, between about 0.05% and 5% of one or more SAPs, for example between about 0.1 % and 3% SAP, such as 0.5 - 2%. The larger the amount of SAP used, the more absorbent the composition is but since SAP is by far the most expensive of the three essential ingredients it should not be used in excess if the cost of the granules is to be kept down. The inclusion of even larger quantities of SAP than listed above is therefore possible but good results for cat litter are obtained by the amounts disclosed above.

The binder or mixture of binders may be present in the composition in amounts of between about 0.1% and 5%, for example between about 0.5% and 3% e.g. about 0.5% to 2%.

The amount of the mineral will essentially be the balance needed to make up 100% with the selected amounts of SAPs and binder. The composition may thus generally include at least 90% of the one or more mineral, but generally will include at least 95% mineral.

The main application of the claimed composition is cat litter. However, the invention is not limited to cat litter and other applications are also contemplated. It is to be noted that some owners of dogs and other mammals train their pets to use litter trays. Accordingly, the use of the composition in a litter that is not specifically for cats is envisaged. Also water-absorbent granules are used in other applications, e.g. in horticulture for absorbing water and subsequently slowly releasing; the granules can also release other compounds, e.g. fertilizer, into the soil. The granules can be used in industry to absorb water and other liquids e.g. to clear up spillages and floods. It can replace bentonite in many of its applications.

The granules may be made by firstly wet mixing the mineral and the superabsorbent polymer in the presence of excess water, i.e. more water than can be absorbed by the above two components. The mineral may be supplied to the mixing step in a wet or dry state, for example as wet filter cake straight from a quarry washing plant. Water can be added to the wet mixing step, as appropriate, to achieve the required excess amount of water in the mix, which may be of the order of 1 part by weight solids: 2 parts liquid. After wet mixing, the excess water is drained off the mineral/SAP and, in addition, some of the absorbed water can also be removed by pressing the wet mixture. In a second step, the binder is then mixed in with the drained SAP/mineral composition; if added during the wet mixing step, it would be washed out of the composition during the draining step. The mixing of the binder can be conducted so as to produce granules but, if not, the mixture can be granulated subsequently, e.g. by peletisation or extrusion or it may be coarsely divided, also known as 'kibbling'.

The granules may be of any shape. The average diameter for use in cat litter is for example between about 1mm and about 10mm, e.g. about 2mm to about 15mm, e.g. about 5mm to about 12mm. Other applications may use different granule sizes.

After formation, the granules are generally subjected to a drying step either in ambient air or by passing an optionally heated air current through the granular composition. In one embodiment, the final bulk density of the composition is approximately 0.7kg / l.

Including shipping costs from the Mediterranean area, e.g. Cyprus or Turkey to the UK, bentonite costs about £55 per tonne. In contrast we estimate that the absorbent material of the present invention, fully manufactured, costs about £35 per tonne ex factory. Accordingly, the present invention not only provides a cheaper alternative to bentonite to make cat litter and other absorbent granules but also is more environmentally friendly and uses waste materials that would otherwise have to be disposed of.

## Brief Description of the Figure

The present invention is now described with reference to the following nonlimiting examples at least partly by reference to:

Figure 1 which shows a schematic flow diagram of a method of making the granular composition of the present invention;

Figure 2 is a graph of the water absorbency of a granular composition according to the present invention against the SAP content of the composition;

Figure 3a to 3h are graphs of water absorbency and dust test in respect of various binders.

## Detailed Description of the Invention

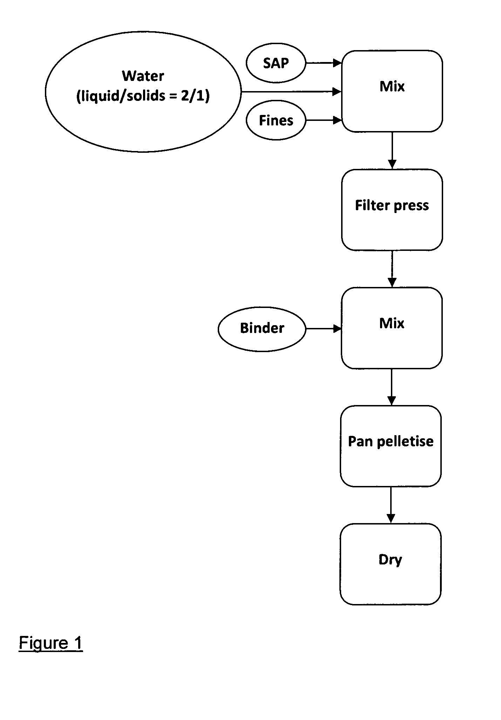

Referring to Figure 1, there is shown a flow diagram of an exemplary method of making granules in accordance with the present invention.

In a first step, calcium carbonate quarry fines having a particle size of less than 700 $\mu$m in the form of a wet filter cake are mixed with Stockosorb 500 powder, which is a super absorbent polymer. Water is added, as required, in order to make up a slurry containing excess water. The reason for using excess water in the first mixing step is to prevent the SAP particles from sticking together and also to disperse the particles evenly and to allow them to fully hydrate. A liquid to solid ratio of 2 parts liquid to 1 part solids appears to work well. The quarry fines are thoroughly mixed with the SAP and water to form a homogeneous mixture, which is then fed to a filter press to remove excess water.

The cake obtained from the filter press contains approximately 70% solids and 30% liquid, primarily water. This pressed filter cake is fed to a Hobart-type mixer where it is mixed under low sheer with a binder. Some mixers will produce a granular composition but if not, the resulting mixture can be pressed through a perforated plate, kibbled or peletised to produce the required granular composition.

The resulting composition is dried either by allowing it to dry naturally or by forcing gas, e.g. air, through the grains; the gas can optionally be heated, preferably using low temperature waste heat. After drying, the pellets can be bagged and sold as cat litter. If additives are to be incorporated into the pellets, they may be added with the fines and SAPs as long as the additives are water-insoluble solids. If they are liquid or water soluble, they should be added together with the binder since otherwise, they will be lost from the filter cake with the water.

The preferred binder is an anionic acrylamide copolymer, e.g. Alcotac CB6, which is manufactured by CIBA, a polyvinyl alcohol, e.g. Gohsenol GH-17R, which is manufactured by Nippon Gohsei; or hydrolysed potato starch, e.g. Casucol 301, which is manufactured by Avebe.

In one embodiment, the composition may include the following amounts:

| | |
|---|---|
| Calcium carbonate quarry fines | 99.25% |
| Stockosorb 500 powder | 0.5% |
| Alcotac CB6 | 0.25% |

Example 1 - Effect of varying the Amounts of SAP

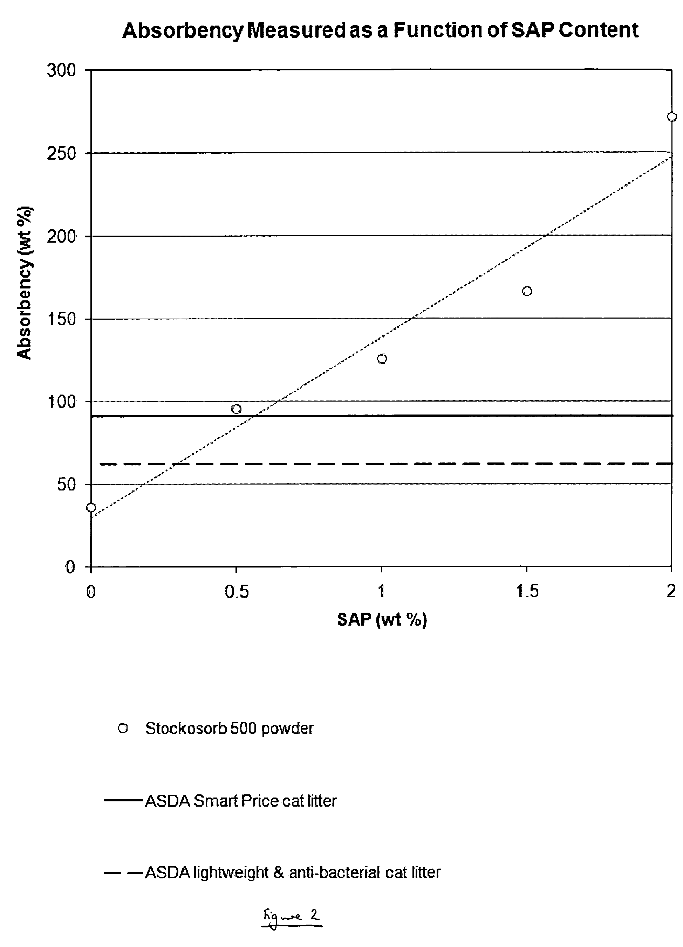

Turning now to Figure 2, which is a graph showing the water absorbency of compositions containing variable amounts of Stockosorb 500 powder (SAP). The amount of binder is maintained in all compositions at 0.25%; the amount of SAP is varied and the balance is made up of the quarry fines.

As can be seen from Figure 2, the water absorbency increases linearly with the amount SAP added. Figure 2 also shows the water absorbency of two commercially available bentonite-based cat litters (Asda SP (Smart Price) and Asda LW (Low Weight)), which can be obtained from the UK supermarket chain Asda.

As can be seen, the water absorbency of granules in accordance with the present invention can exceed those of the commercially available cat litters with a SAP level as low as 0.5%.

Example 2 - Effect of different binders and different binder amounts

Various compositions were prepared using the methods shown in Figure 1 by the following steps:

0.5% Stockosorb 500 powder and 99.5% calcium carbonate fines were mixed with water in a ratio of 2 parts liquids to 1 part solid. The total weight of the solids were 3 kg (the % given are based on the total amount of the Stockosorb 500 powder and the calcium carbonate fines).

The slurry from step 1 was drained and pressed on a filter press using a filter cloth for two hours 20 minutes at approximately seven bars to produce a filter cake measuring 250mm x 250mm x 25mm. The filter cake contains approximately 67 wt % solids.

The filter cake was mixed with a selected binder for three minutes in a Hobart mixer. The binders tested were:

a) Alcotac CB6 which is an acrylamide copolymer obtainable from CIBA.
b) Casucol 301 which is available from Avebe Ltd
c) Gohsenol GH-17R, which is a polyvinyl alcohol obtainable from Nippon Gohsei;
d) Borresperse, which is a calcium lignosulphonate, obtainable from Borregard Lignotech.

The amounts of binder added varied between 0.5 and either 2% or 2.5%, usually in steps of 0.5% (based on the total amount of binder, SAP and fines).

The mixture was then pelletized and dried.

Each sample was tested for water absorbency according to a method equivalent to the standard Westinghouse method, which is conducted as follows:

A cat litter sample is mixed well to provide an homogenous sample. Three simultaneous determinations are made on the representative sample using stainless steel $355\mu$m mesh cones. For each of three cones, the following steps are performed:

1) Weigh each of three clean dry stainless steel $355\mu$m mesh cones, each 70mm diameter and 70mm high (weight M1)
2) Weigh 20 grams of the sample into each of the cone and weigh the combination of cone and sample (weight M2)
3) Immerse the cone in a container filled with deionised water for 20 minutes.
4) Withdraw the cone and allow it to drain for 30 minutes.
5) Weigh the combination of cone, saturated sample to the nearest 0.1 gram (weight M3)

The absorbency was calculated as follows:

$$\text{Absorbency} = \frac{M3 - M2}{M2 - M1} \times 100 = \text{Percentage of Mass}$$

For the results, an average (mean) of the three tests was taken.

The dust (particles <500 $\mu$m) generated by the compositions was tested by tumbling a 50 g sample of each type of granule in a ball mill for 15 minutes, sieving the tumbled granules using a $500\mu$m sieve and weighing the fraction having a diameter <500 $\mu$m.

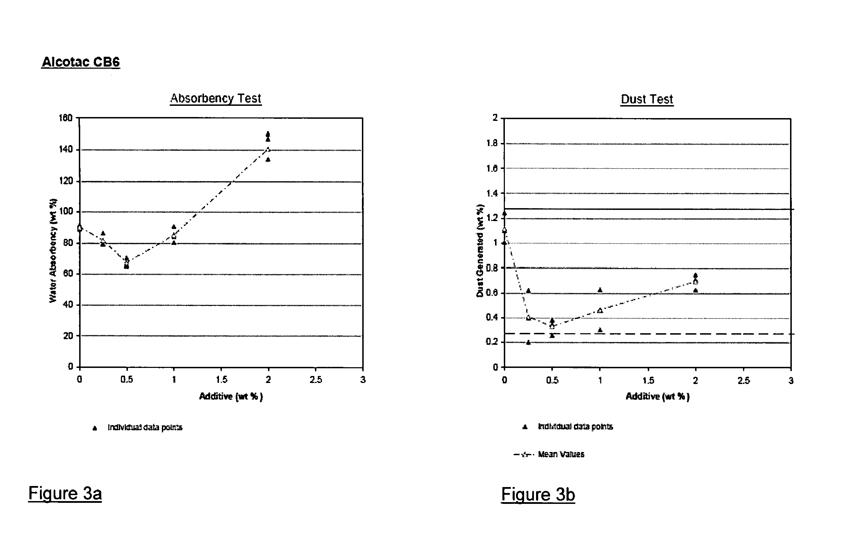

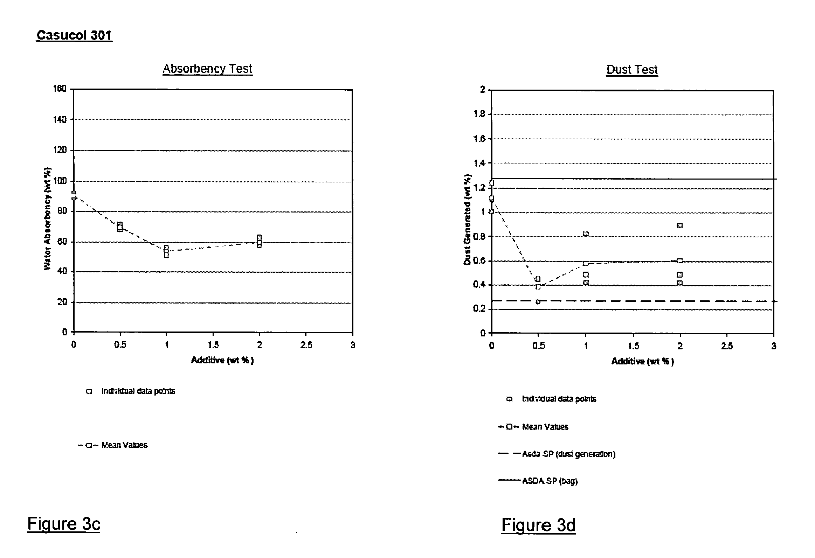

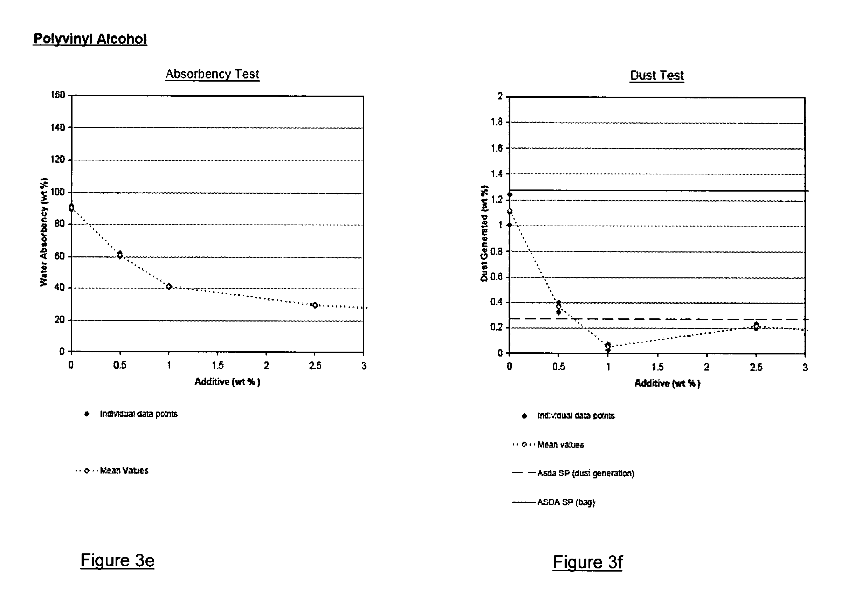

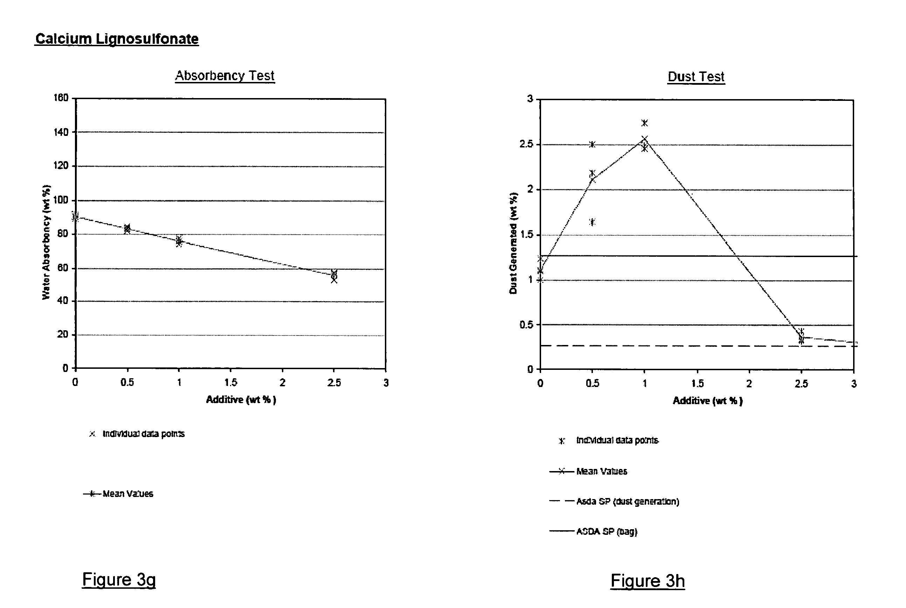

The results of the absorbency and dust tests are shown in Figure 3. In Figures 3b, 3d, 3f and 3h the dust test also shows values for a commercially available cat litter, Asda SP the term "dust generation" used in Figure 3 means the weight of dust generated in the test described in the preceding paragraph and "bag" means the weight of dust (particles <500$\mu$m) in the bagged product (taken directly from the bagging plant).

As can be seen, the compositions in accordance with the present invention produce high water absorbency values and low amounts of dust, particularly for Alcotac CB6 binders. This is the case even though the composition contains only 0.5% SAP.

The results for Alcotac CB6 and Casutol 301 binders surprisingly show a reduction in the water absorbency figure at 0.5 to 1% binder, but more importantly this was accompanied by a reduction in the value of generated dust and so this is a preferred range of binder to operate in. The results for calcium lignosulfonate and polyvinyl alcohol provide reasonable water absorbency and dust generation results.

In summary, the present invention provides a low cost water absorbent granular material using waste quarry fines. The granular material produced has water absorbency characteristics comparable to that of the more expensive bentonite-products, which are environmentally damaging due to the need to transport bentonite.

**Claims**

**1.** A porous granular water-absorbent composition comprising:

(a) a particulate inorganic mineral ,
(b) one or more superabsorbent polymers (SAP) dispersed between the particles of the mineral , and
(c) a hydrophilic binder capable of binding the mineral and the SAP into discrete granules.

**2.** The composition of claim 1, wherein the composition comprises between about 90% and 99.5% by weight, of the mineral, based on the total amounts of components (a) to (c) in the composition.

**3.** The composition of claim 1 or claim 2, wherein the composition comprises between 0.05% to 5%, by weight, of SAP, based on the total amounts of components (a) to (c) in the composition, e.g. 0.1 to 3% SAP, for example 0.5 to 2% SAP.

**4.** The composition as claimed in any preceding claim, wherein the composition comprises between about 0.1% and 5%, by weight, of binder, based on the total amounts of components (a) to (c) in the composition, e.g. 0.5 to 2% binder.

**5.** The composition of any preceding claim, wherein the superabsorbent polymer is any one or any combination selected from the following:

(a) crosslinked acrylic acid polymers
(b) crosslinked acrylamide polymers and
(c) salts of the above polymers, especially sodium, potassium and/or ammonium salts.

**6.** The composition of any preceding claim, further comprising one or more additives selected from a perfume, a biocide, and a colourant.

**7.** A composition according to any preceding claim, wherein 95 wt% of the mineral has particle size of not greater than $1000\mu m$ in diameter, e.g. not greater than $250\mu m$ in diameter, such as not greater than $100\mu m$.

**8.** A composition according to any preceding claim, wherein the mineral is derived from a waste source, e.g. fines or silt from the mining or quarrying industries.

**9.** A composition according to any preceding claim, wherein the mineral is porous, e.g. chalk or other form of $CaCO_3$.

**10.** The composition according to any preceding claim, which incorporates a colourant that colours the granules of the composition, e.g. a white pigment such as titanium dioxide.

**11.** A method of manufacturing a composition according to any preceding claim, which comprises mixing the mineral and the super absorbent polymer to form a slurry, draining the water from the slurry and optionally pressing the resulting filter cake, mixing the binder with the wet filter cake and granulating and drying the resulting composition.

**12.** Use of the composition according to any one of claims 1 - 10 as an absorbent material for animal urine, for example as cat litter.

**14.** Cat litter comprising the composition according to any one of claims 1 - 10.

Figure 1

**Absorbency Measured as a Function of SAP Content**

○  Stockosorb 500 powder

——ASDA Smart Price cat litter

— —ASDA lightweight & anti-bacterial cat litter

Figure 2

Alcotac CB6

Absorbency Test

Individual data points

Figure 3a

Dust Test

Individual data points

Mean Values

Figure 3b

**Casucol 301**

Absorbency Test

Water Absorbency (wt %)

Additive (wt %)

□ Individual data points

—□— Mean Values

Figure 3c

Dust Test

Dust Generated (wt %)

Additive (wt %)

□ Individual data points

—□— Mean Values

— — Asda SP (dust generation)

—— ASDA SP (bag)

Figure 3d

## Polyvinyl Alcohol

### Absorbency Test

Figure 3e

### Dust Test

Figure 3f

EP 2 241 178 A1

## Calcium Lignosulfonate

Absorbency Test

Figure 3g

Dust Test

Figure 3h

EP 2 241 178 A1

Europäisches
Patentamt

European
Patent Office

Office européen
des brevets

## EUROPEAN SEARCH REPORT

Application Number

EP 09 25 1125

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/06671 A1 (ALLIED COLLOIDS LTD [GB]; LUKE DONALD ALLEN [US]; GAGEN GEOFFREY STEVE) 27 February 1997 (1997-02-27) * page 14, line 37 - page 15, line 3; claims; example 1 * ----- | 1-12,14 | INV. A01K1/015 |
| X | US 5 339 769 A (TOTH CHERYL A [US] ET AL) 23 August 1994 (1994-08-23) * column 3, line 60 - line 64 * * column 4, line 1 - line 17 * * column 4, line 61 - column 5, line 8 * * column 5, line 21 - line 39; claims; examples 1,4 * ----- | 1-12,14 | |

TECHNICAL FIELDS
SEARCHED       (IPC)

A01K

The present search report has been drawn up for all claims

| Place of search | Date of completion of the search | Examiner |
|---|---|---|
| The Hague | 4 February 2010 | Blas, Valérie |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

........................................................................................................

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**

EP 09 25 1125

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2010

| Patent document cited in search report | | Publication date | Patent family member(s) | | Publication date |
|---|---|---|---|---|---|
| WO 9706671 | A1 | 27-02-1997 | AU<br>US<br>ZA | 6825396 A<br>5609123 A<br>9607033 A | 12-03-1997<br>11-03-1997<br>19-08-1997 |
| US 5339769 | A | 23-08-1994 | WO | 9502320 A1 | 26-01-1995 |

For more details about this annex : see Official Journal of the European Patent Office, No. 12/82